Europäisches Patentamt

European Patent Office

Office européen des brevets

(11) Publication number: 0 530 192 B1

# EUROPEAN PATENT SPECIFICATION

(45) Date of publication of patent specification: **05.04.95**　(51) Int. Cl.6: **B01J 20/34**

(21) Application number: **91901654.3**

(22) Date of filing: **15.01.91**

(86) International application number:
**PCT/BE91/00002**

(87) International publication number:
**WO 92/12791 (06.08.92 92/21)**

(54) **MOLECULAR SIEVE REGENERATION PROCESS.**

(43) Date of publication of application:
**10.03.93 Bulletin 93/10**

(45) Publication of the grant of the patent:
**05.04.95 Bulletin 95/14**

(84) Designated Contracting States:
**AT BE CH DE DK ES FR GB GR IT LI LU NL SE**

(56) References cited:
**DE-A- 1 813 883**
**US-A- 4 550 090**
**US-A- 4 686 198**

**CHEMICAL ABSTRACTS, vol. 87, 1977, Columbus, Ohio, US; abstract no. 25455M, SHINBORI 'REGENERATION OT ZEOLITE ' page 128 ; & JP-A-7735799 (TOYO SODA) SEE ABSTRACT**

**CHEMICAL ABSTRACTS, vol. 81, no. 14, October 7, 1974, Columbus, Ohio, US; abstract no. 82742C, ZLOTCHENKO 'REGENERATION OF ZEOLITES THAT HAVE LOST THEIR ABSORPTIVE POWER ' page 329 ; & SU-A-**

**405569 (ZLOTCHENKO) SEE ABSTRACT**

(73) Proprietor: **FINA RESEARCH S.A.**
**Zone Industrielle C**
**B-7181 Feluy (BE)**

(72) Inventor: **BODART, Philippe**
**Magnery 6**
**B-4480 Clermont (BE)**
Inventor: **DE CLIPPELEIR, Georges**
**Petrus Huysegomstraat 5**
**B-1600 Sint-Pieters-Leeuw (BE)**
Inventor: **VAN THILLO, Hugo**
**Sint-Hubertusstraat 14**
**B-1850 Grimbergen (BE)**

**Description**

This invention relates to the regeneration of spent molecular sieve. More particularly, it relates to the regeneration of molecular sieve which has been used for the purification of hydrocarbon solvents by the removal of alkyl chlorides therefrom.

The production of conjugated diene polymers or copolymers thereof with vinyl aromatics by solution polymerization is well known in the art. Typically, the polymerization process involves polymerizing monomers in a solvent in the presence of a suitable organoalkali metal initiator.

In commercial operations, it has proven advantageous to recover the solvent from previous polymerizations for reuse in subsequent polymerizations. The reuse of the solvent which was obtained from certain solution polymerizations which employ coupling agents can result in undesirable variations in the properties of the polymers produced in subsequent solution polymerizations, due to alkyl chlorides that are formed as a byproduct of the coupling step in the preceding polymerization process, and that said variations could be avoided by contacting the solvent from the first polymerization with a molecular sieve to remove at least part of the alkyl chlorides from the solvent prior to the use of the solvent in the subsequent polymerization.

However, molecular sieve regeneration procedures known presently are not satisfactory. US Patent 4,250,270 discloses the use of hydrogen at a preferred temperature range of 300 - 450°F (150 - 230°C), at a preferred pressure of 400-1000 psig (2.8 - 6.9 MPa), with obvious drawbacks both from the technical and safety points of view. Also disclosed is the evacuation of the contacting vessel, which must thus be resistant thereto at considerable expense. Another regeneration procedure involves burning off the adsorbed materials under air flow at 500 - 800°F (260 - 430°C). All these methods involve high equipment and/or operation costs.

Accordingly, there is a need in the art for a regeneration process that would not present these drawbacks.

Thus, an object of the present invention is to provide a regeneration process that would require neither high temperatures, nor high pressures, nor extensive safety measures.

Other objects, advantages and features of this invention will be apparent to those skilled in the art from the following discussion.

The process of present invention for regenerating spent alumino-silicate molecular sieve under alkali metal form that has been used for the removal of alkyl chlorides from hydrocarbon solvents thus comprises the steps of :

(i) contacting the spent molecular sieve with an alkaline solution of an alkali metal salt, having a pH of from 7.5 to 10 and an alkali metal concentration of at least 0.01 M;

(ii) washing the molecular sieve with water;

(iii) drying the molecular sieve thus regenerated.

The present invention is applicable to any spent molecular sieve that has been used for the purification of hydrocarbon solvents, more particularly for the removal of alkyl chlorides therefrom.

In one embodiment thereof, this invention is applicable to any polymerization process carried out in the presence of a solvent, wherein alkyl chlorides are formed, for example as a result of a coupling step, whenever the solvent is recycled after purification by passage over a molecular sieve. Although, the mechanism is not totally understood, it is believed that the alkyl chlorides form as a result of interaction between chloride in the coupling agent and alpha-olefins or possibly residual monomer in the polymerization mixture.

The present invention thus represents an improvement in the solution polymerization process wherein (1) monomers comprising at least one conjugated diene are polymerized in a first polymerization in a solvent in the presence of an organoalkali metal initiator followed by coupling with a polyfunctional coupling agent which results in alkyl chloride formation; and (2) solvent is recovered and used in a subsequent solution polymerization process wherein monomers comprising at least one conjugated diene are polymerized in the presence of an organoalkali metal initiator.

The subsequent polymerization can be the same as or different than the first polymerization. It is not necessary that subsequent polymerization be one employing a polyfunctional coupling agent. The extent to which the alkyl chlorides affect the properties of the polymers in the subsequent polymerization can vary depending upon the particular type of polymer being produced in that polymerization.

The monomers employed in the polymerizations can be any of those recognized as suitable in the prior art. The conjugated diene monomers generally contain 4 to 12 carbon atoms per molecule and preferably 4 to 8 carbon atoms per molecule. Examples of such compounds include 1,3-butadiene, isoprene, 2,3-dimethyl-1,3-butadiene, and the like. Other comonomers such as vinyl-substituted aromatic compounds can be employed with the conjugated diene monomers. Vinyl-substituted aromatic compounds generally contain 8 to 18 carbon atoms per molecule. Examples of such compounds include styrene, 3-methylstyrene, alpha-methylstyrene, para-methylstyrene, and the like. The conjugated dienes can be polymerized alone or in admixture with vinyl-substituted aromatic compounds to form any of the homopolymers, random copolymers or block copolymers known in the art. Monomers which are preferred are butadiene, isoprene, and styrene.

The term block copolymers as used herein is intended to include linear, star-shaped and branched copolymers. Included within the term block copolymer are the polymers of the formula $(A-B)_xY$, wherein A and B denote different polymer blocks, Y is an atom or group of atoms derived from a polyfunctional coupling agent and x represents the number of functional groups of the coupling agent and is an integer of at least 2.

The polymers of the above-listed compounds are prepared by contacting the monomer or monomers which it is desired to polymerize with an organoalkali metal compound, including mono and polyalkali metal compound, in the presence of a hydrocarbon diluent. The organoalkali metal compounds preferably contain from 1 to 4 alkali metal atoms per molecule. While organometallic compounds of any of the alkali metals can be employed, organolithium compounds are preferred. The alkali metals include lithium, sodium, potassium, rubidium, and cesium.

The preferred class of organolithium initiators are those of the formula RLi wherein R is a hydrocarbon radical selected from the group consisting of aliphatic, cycloaliphatic, and aromatic radicals containing from 1 to 20 carbon atoms, although higher molecular weight initiators can be used. Examples of such initiators include methyllithium, n-butyllithium, sec-butyllithium, n-decyllithium, phenyllithium, naphthyllithium, p-tolyl-lithium, cyclohexyllithium, and the like.

The polymerization reactions can be conducted under any suitable polymerization conditions. Generally, the temperature is in the range between -100° and +175°C, preferably -75° and +125°C. The polymerization can be conducted under autogenous pressure. It is usually desirable to operate at pressures sufficient to maintain the polymerization recipe ingredients substantially in the liquid phase.

Any suitable solvents can be employed in the polymerizations. Typically, the solvents are hydrocarbons selected from aromatics, paraffins, cycloparaffins, and mixtures thereof, containing 4 to 10 carbon atoms per molecule. Examples include isobutane, n-pentane, cyclohexane, benzene, toluene, xylene, naphthalene, and the like.

Non-limiting examples of polyfunctional coupling agents which can result in the formation of alkyl chlorides during the coupling step include mono- and polyhalosilanes, silicon tetrachloride and tin tetrachloride, especially where those coupling agents are employed in excess of the stoichiometric polymer-lithium present, as for example in those polymerization processes in which maximum coupling is desired.

The solvent that is to be contacted with the molecular sieve material can be recovered in any suitable manner. Typically, it is obtained as the overhead from the flashing of the mixture resulting from the polymerization. Preferably, the solvent that is contacted with the molecular sieve is substantially free of water, i.e. containing no more than about 10 ppm of water, preferably no more than 5 ppm. Further, the said solvent should contain as little conjugated dienes as possible, preferably less than 5 wt %, most preferably less than 1 wt %.

In the practice of this invention, alkyl chlorides are removed from the solvent by molecular sieve material of the crystalline alumino-silicate zeolite type under alkali metal form, which have been heated to remove water of hydration. The adsorbent materials may be prepared by any of the well known methods in the art. The literature contains many references to the composition and adsorbing action of molecular sieves. Generally speaking, molecular sieves are alkali metal or alkaline earth metal alumino-silicates and can be either natural or synthetic in origin. Said materials have large numbers of submicroscopic cavities interconnected by many smaller pores or channels which are extremely uniform in size. In operation, the generally accepted explanation for the action of the molecular sieves is that adsorption takes place within said pores, and only those materials having molecular diameters small enough to enter said pores are retained by the zeolite. Hence, the name molecular sieves. Generally, the molecular sieves applicable in the present invention are those having effective pore diameters in the range of about 0.5 to about 1.1 nm in their alkali metal form. Large-pore mordenite and 13X type molecular sieves have pore diameters in that range. The molecular sieves applicable in the present invention should preferably have an atomic ratio Si/Al lower than 20, most preferably lower than 8. The currently preferred molecular sieve is the 13X type molecular sieve.

The molecular sieve materials can be employed in granular form, such as 1.5 to 6 mm beads, pellets or extrudates, or in finely divided form, such as about 200 mesh. The contacting of the substantially water-free solvent with the molecular sieve materials can be carried out in any suitable zone, such as a fixed bed, moving bed, or the like.

The conditions employed for contacting the substantially water-free solvent with the molecular sieve materials can vary depending upon the concentration of alkyl chloride, the desired degree of removal of alkyl chloride, and other factors that will be readily apparent to those skilled in the use of molecular sieves. The temperature of contacting will generally be in the range of about 10° to about 90°C, preferably about 20° to about 30°C. The contacting pressure is not critical and generally will be within the range of from atmospheric to about 4 MPa. Generally, it is preferred to employ a pressure sufficient to maintain the solvent in the liquid phase and sufficient to provide for normal pressure drops through the bed when a fixed bed is employed. Generally, the contacting can be carried out at liquid hourly space velocities within the range of from 0.1 to 10.0, preferably 0.5 to 1.5.

The process of the invention for regenerating spent molecular sieve comprises as first step the contacting of the sieve with an alkaline solution of an alkali metal salt.

The alkali metal concentration must be of at least 0.01 M, preferably at least 0.05 M and most preferably at least 0.1 M.

The process of the invention may be carried out either in batch or as a continuous process. When used in batch mode, the contacting step with an alkaline solution of an alkali metal salt should be repeated until the amount of chlorine in the solution has decreased by at least a factor of 10, in order to obtain a complete regeneration. When carried out as a continuous process, the elution with said alkaline solution should be continued until the amount of chlorine in the eluate has decreased by at least a factor of 10, in order to obtain a complete regeneration. Over a fixed bed, the liquid hourly space velocity (LHSV) is not very critical; LHSV values of 0.5-5 are preferably used.

The pH of the solution must be of at least 7.5, for reasons of efficiency, and it should not exceed about 10 because the molecular sieve materials would be deteriorated. The preferred pH range is of from 8 to 9.

As alkaline salt, there may be envisaged any salt or mixture of salts giving the required pH values, preferably having some buffer capacity towards lower pH values, providing that the anion does not react with or otherwise modify the molecular sieve. Suitable examples include sodium bicarbonate, potassium bicarbonate, trisodium pyrophosphate, $Na_2HPO_4/NaH_2PO_4$ buffer, and the like. It can also be envisaged to use a mixture of potassium or sodium hydroxide with at least one alkali metal salt. However, it is preferred to use sodium bicarbonate.

The temperature when contacting the alkaline solution of an alkali metal salt with the molecular sieve is not very critical : temperatures of from about 0°C to about 90°C may be used, although temperatures of about 10 to 40°C are preferred.

As next step, the molecular sieve must be washed with water until the effluent is substantially free of alkali metal salt. Whilst not wishing to be bound by a theory, it is believed that the alkyl chlorides which have been removed by the molecular sieve are eliminated during the washing step under the form of alkanol and chloride ions.

Then, as hereabove mentioned, the molecular sieve must be dried in order to be reusable as adsorbent for alkyl chlorides in hydrocarbon solvents.

The invention will now be described by way of the following examples which are not to be construed as limiting the scope of the invention.

Example 1

The 13X molecular sieve used in this example was obtained from UNION CARBIDE, under the form of 1.6 mm diameter rods having a bulk density of 0.64 g/cm$^3$. It was heated at 200°C under nitrogen before use.

Recycle solvent (55 wt % cyclohexane, 45 wt % of various butanes and butenes) containing 190 ppm of chlorine (chemically under the form of alkyl chlorides of which more than 90% was t-butyl chloride) was passed over said 13X molecular sieve at 25°C, under atmospheric pressure and with a liquid hourly space velocity (LHSV) of 1.5. Initially, 92% of the alkyl chlorides were removed. When the removal efficiency obtained was of 80% (after 140 hours of operation), the amount of chlorine then adsorbed since starting the purification (hereinafter called adsorption capacity) was of 3.5 wt %.

The molecular sieve was purged free of hydrocarbon solvent. It was then washed with a 10 g/l aqueous solution of sodium bicarbonate passed at a LHSV of 0.5 during 12 hours.

After washing the molecular sieve with water at 25°C during 6 hours at a LHSV of 0.5, it was purged free of water and heated at 200°C under nitrogen flow. A chlorine determination showed that the regenerated molecular sieve contained less than 0.1 wt % of chlorine.

The removal of alkyl chlorides from a recycle solvent was repeated as hereabove described, using the regenerated molecular sieve. The adsorption capacity, as hereabove defined, was of 3.4 wt % of chlorine.

Example 2

A 13X molecular sieve having been used to remove alkyl chlorides from a hydrocarbon solvents contained 4.2 wt % of chlorine.

It was washed with a 7.3 g/l aqueous solution of sodium bicarbonate, at 20°C and with a LHSV = 1 l/l.h. Chlorine was determined in the eluate : the average concentration was of 0.5 g/l during the first six hours, 0.15 g/l during the next six hours and 0.03 g/l during a third period of six hours, corresponding to the removal of 97% of the chlorine contained in the molecular sieve as a result of the adsorption of alkyl chlorides from the hydrocarbon solvent.

Comparative example

The procedure of example 1 was repeated, using various aqueous solutions instead of the 10 g/l sodium bicarbonate solution :

|  | nature of the aqueous solution | adsorption capacity after regeneration (as wt% of chlorine) |
|---|---|---|
| example A | water pH 7 | 0.7 |
| example B | NaOH pH 10 | 3.01 after 1st regeneration<br>1.79 after 2nd regeneration<br>0.91 after 3rd regeneration |

**Claims**

1. Process for regenerating spent alumino-silicate molecular sieve under alkali metal form that has been used for the removal of alkyl chlorides from hydrocarbon solvents comprising the steps of :
   (i) contacting the spent molecular sieve with an alkaline solution of an alkali metal salt, having a pH of from 7.5 to 10 and an alkali metal concentration of at least 0.01 M;
   (ii) washing the molecular sieve with water;
   (iii) drying the molecular sieve thus regenerated.

2. Process according to claim 1, wherein the alkali metal concentration is of at least 0.05 M.

3. Process according to claim 2, wherein the alkali metal concentration is of at least 0.1 M.

4. Process according to any one of claims 1 to 3, wherein the pH of the solution is of from 8 to 9.

5. Process according to claim 4, wherein the salt is selected from the group consisting of sodium bicarbonate, potassium bicarbonate, trisodium pyrophosphate, $Na_2HPO_4/NaH_2PO_4$ buffer, and mixtures thereof.

6. Process according to any one of claims 1 to 5, wherein in step (i) the alkaline solution of an alkali metal salt is passed continuously over the molecular sieve.

7. Process according to claim 6, wherein the liquid hourly space velocity of the solution is of from 0.1 to 5.

8. Process according to any one of claims 1 to 7, wherein the temperature is of from 10°C to 40°C.

9. Process according to claim 1, wherein the molecular sieve is of the 13X type and about 6 volumes of our aqueous bicarbonate solution having a concentration of about 10 g/l are passed over each volume of the spent molecular sieve.

**Patentansprüche**

1. Verfahren zur Regeneration eines verbrauchten Alumosilicat-Molekularsiebs in der Alkalimetallform, das zur Abtrennung von Alkylchloriden aus Kohlenwasserstoff-Lösungsmitteln verwendet wurde, welches die folgenden Schritte aufweist:

   (i) Kontaktieren des verbrauchten Molekularsiebs mit einer alkalischen Lösung eines Alkalimetallsalzes mit einem pH von 7,5 bis 10 und einer Alkalimetallsalz-Konzentration von mindestens 0,01 M;
   (ii) Waschen des Molekularsiebs mit Wasser;
   (iii) Trocknen des so regenerierten Molekularsiebs.

2. Verfahren nach Anspruch 1, bei dem die Alkalimetall-Konzentration mindestens 0,05 M beträgt.

3. Verfahren nach Anspruch 2, bei dem die Alkalimetall-Konzentration mindestens 0,1 M beträgt.

4. Verfahren nach einem der Ansprüche 1 bis 3, bei dem der pH der Lösung 8 bis 9 beträgt.

5. Verfahren nach Anspruch 4, bei dem das Salz aus der Gruppe ausgewählt ist, die aus Natriumbicarbonat, Kaliumbicarbonat, Trinatriumpyrophosphat, $Na_2HPO_4/NaH_2PO_4$-Puffer und Gemischen daraus besteht.

6. Verfahren nach einem der Ansprüche 1 bis 5, bei dem in Schritt (i) die alkalische Lösung eines Alkalimetallsalzes kontinuierlich über das Molekularsieb geleitet wird.

7. Verfahren nach Anspruch 6, bei dem die stündliche Flüssigkeitsraumgeschwindigkeit der Lösung 0,1 bis 5 beträgt.

8. Verfahren nach einem der Ansprüche 1 bis 7, bei dem die Temperatur 10°C bis 40°C beträgt.

9. Verfahren nach Anspruch 1, bei dem das Molekularsieb vom 13X-Typ ist und etwa 6 Volumina der wäßrigen Bicarbonat-Lösung mit einer Konzentration von etwa 10 g/l über jedes Volumen verbrauchtes Molekularsieb geleitet werden.

**Revendications**

1. Procédé de régénération de tamis moléculaire alumino-silicaté usagé sous sa forme métal alcalin, ayant servi a l'enlèvement de chlorures d'alkyle de solvants hydrocarbonés, comprenant les étapes suivantes :

   (i) mise en contact du tamis moléculaire usagé avec une solution alcaline d'un sel de métal alcalin, ayant un pH compris entre 7,5 et 10 et une concentration en métal alcalin d'au moins 0,01 M;
   (ii) lavage du tamis moléculaire à l'eau;
   (iii)séchage du tamis moléculaire ainsi régénéré.

2. Procédé selon la revendication 1, dans lequel la concentration en métal alcalin est d'au moins 0,05 M.

3. Procédé selon la revendication 2, dans lequel la concentration en métal alcalin est d'au moins 0,1 M.

4. Procédé selon l'une quelconque des revendications 1 à 3, dans lequel le pH de la solution est de 8 à 9.

5. Procédé selon la revendication 4, dans lequel le sel est choisi dans le groupe comprenant le bicarbonate de sodium, le bicarbonate de potassium, le pyrophosphate trisodique, le tampon $Na_2HPO_4/NaH_2PO_4$, et leurs mélanges.

6. Procédé selon l'une quelconque des revendications 1 à 5, dans lequel dans l'étape (i) la solution alcaline d'un sel de métal alcalin est passée en continu sur le tamis moléculaire.

7. Procédé selon la revendication 6, dans lequel la vitesse spatiale horaire liquide de la solution est de 0,1 à 5.

8. Procédé selon l'une quelconque des revendications 1 à 7, dans lequel la température est de 10 a 40°C.

9. Procédé selon la revendication 1 dans lequel le tamis moléculaire est de type 13X, et dans lequel environ 6 volumes de notre solution aqueuse de bicarbonate ayant une concentration d'environ 10 g/l sont utilisés pour chaque volume de tamis moléculaire usagé.